# EUROPÄISCHE PATENTSCHRIFT

(11) **EP 4 025 790 B1**
(45) Veröffentlichungstag und Bekanntmachung des Hinweises auf die Patenterteilung: **06.12.2023**
(21) Anmeldenummer: 20799696.8
(22) Anmeldetag: 29.10.2020
(51) Int. Cl.: F15B 1/24, F16J 15/3208

(54) **KOLBENSPEICHER**
PISTON ACCUMULATOR
ACCUMULATEUR À PISTON

(30) Priorität: 07.11.2019 DE 102019007711
(43) Veröffentlichungstag der Anmeldung: 13.07.2022
(73) Patentinhaber: Hydac Technology Gmbh, 66280 Sulzbach / Saar (DE)
(72) Erfinder: BALTES, Herbert, 66679 Losheim (DE); KLOFT, Peter, 56235 Ransbach-Baumbach (DE)
(74) Vertreter: Bartels und Partner, Patentanwälte
(86) Internationale Anmeldenummer: PCT/EP2020/080366
(87) Internationale Veröffentlichungsnummer: WO 2021/089397

(56) Entgegenhaltungen:
- WO-A2-2006/096620
- DE-C- 967 721
- FR-A- 1 299 239

## Beschreibung

Die Erfindung betrifft einen Kolbenspeicher mit den Merkmalen im Oberbegriff des Anspruchs 1.

DE 102 48 823 A1 offenbart einen Hydrospeicher in Form eines Kolbenspeichers mit einem im Speichergehäuse in dessen Axialrichtung bewegbaren, eine Gasseite von einer Fluidseite des Speichergehäuses trennenden Kolben, an dessen Umfang für das Zusammenwirken mit der Wand des Speichergehäuses vorgesehene Führungselemente sowie mehrere Dichtelemente vorhanden sind, wobei in Axialrichtung zu den Führungselementen versetzt, in dem zwischen diesen gelegenen Umfangsabschnitt des Kolbens angeordnet, ein Druckausgleichskanal vorgesehen ist, der einen Fluidweg zwischen der Fluidseite und einem Raum am Kolbenumfang bildet, welcher zwischen dem der Fluidseite nächstgelegenen Führungselement und dem in Axialrichtung nächstfolgenden Dichtelement gelegen ist, wobei im Druckausgleichskanal eine dessen Durchlassquerschnitt verkleinernde Einrichtung in Form einer Blende oder Düse vorgesehen ist.

Der bekannten Lösung liegt die Überlegung zugrunde, dass Schmutzpartikel, die in dem auf der Fluidseite befindlichen Hydrauliköl enthalten sein können, das Langzeitverhalten des Hydrospeichers ebenso negativ beeinflussen wie das Betriebsverhalten der Dicht- und Führungssysteme zwischen Kolbenumfang und der Innenwand des Speichergehäuses. Durch den Druckausgleichskanal im Trennkolben ist den vorstehenden Problemen begegnet, weil bei den im Betrieb auftretenden Kolbenbewegungen keine Druckdifferenz am Führungselement mehr auftritt und somit auch kein möglicherweise mit Schmutzpartikeln belasteter Volumenstrom erzeugt ist. Da der Durchlassquerschnitt des Druckausgleichskanals über die Blende oder Düse verkleinert ist, ist darüber hinaus sichergestellt, dass lediglich ein geringes Fluidvolumen am Vorgang des dahingehenden Druckausgleichs beteiligt ist.

Es hat sich nun in der Praxis gezeigt, dass es bei den hier angesprochenen hydropneumatischen Kolbenspeichern mit Doppeldichtungssystem für den Trennkolben im Betrieb zu einem Druckaufbau zwischen den beiden Dichtungen respektive Dichtungssystemen kommt, der bis zum maximalen Betriebsdruck des Speichers reicht oder durch sog. Pumpeffekte diesen sogar übersteigen kann. In der Folge kann es dann zu unterschiedlichen Effekten, wie Betriebsgeräuschen, und zu einer Extrusion der Dichtungssysteme bis hin zum Klemmen des Kolbens kommen. Die dahingehend auftretenden Probleme sind mit dem anders wirkenden Druckausgleichskanal nach der DE 102 48 823 A1 nicht behoben.

Die FR 1 299 239 offenbart einen Kolbenspeicher mit einem Speichergehäuse und einem darin längsverfahrbar geführten Trennkolben, der zwei Medienräume voneinander separiert und der ein Doppeldichtungssystem aufweist, von dem ein Dichtungssystem dem einen Medienraum und das andere Dichtungssystem dem anderen Medienraum zugewandt ist, wobei zwischen den beiden Dichtungssystemen eine Ausgleichseinrichtung zumindest teilweise im Trennkolben aufgenommen ist, die zur Vermeidung eines unerwünschten Druckaufbaus während des Betriebs einen hydrostatischen Druckausgleich zwischen den beiden Dichtungssystemen ermöglicht.

Die WO 2006/096620 A2 und die DE 967 721 C beschreiben weitere Kolbenspeicher.

Ausgehend von diesem Stand der Technik liegt der Erfindung die Aufgabe zugrunde, die bekannten Kolbenspeicherlösungen dahingehend weiter zu verbessern, dass es nicht zu dem vorstehend beschriebenen Druckaufbau mit seinen unerwünschten Wirkungen kommen kann.

Eine dahingehende Aufgabe ist durch einen Kolbenspeicher mit den Merkmalen des Patentanspruchs 1 in seiner Gesamtheit gelöst.

Gemäß dem kennzeichnenden Teil des Patentanspruchs 1 ist die Ausgleichseinrichtung in einer Ringnut des Trennkolbens aufgenommen und aus einem umlaufenden Dichtungsring gebildet, der mit zwei vorspringenden Ringsegmenten mit der Innenseite des Speichergehäuses in Anlage ist, die zwischen sich eine Ringkammer begrenzen, die über mindestens einen Ausgleichskanal mit der Innenseite des Dichtungsringes medienführend verbunden, aus dem Dichtungsring austritt.

Dadurch, dass zwischen den beiden Dichtungssystemen des Doppeldichtungssystems eine Ausgleichseinrichtung zumindest teilweise im Trennkolben aufgenommen ist, die zur Vermeidung eines unerwünschten Druckaufbaues während des Betriebes einen hydrostatischen Druckausgleich zwischen den beiden Dichtungssystemen ermöglicht, kommt es nicht zu dem unerwünschten Druckaufbau mit den beschriebenen nachteiligen Effekten.

Vielmehr erlaubt die erfindungsgemäße Ausgleichseinrichtung zwischen den beiden Dichtungssystemen, dass die Zone des Druckaufbaus zwischen dem einen Dichtungssystem, das dem einen Medienraum mit dem Arbeitsgas zugewandt ist, einen Druckausgleich in Richtung der Zone des Druckabbaus zwischen dieser Ausgleichseinrichtung und dem anderen Dichtungssystem erfährt, das dem anderen Medienraum mit der Flüssigkeit regelmäßig in Form von Hydrauliköl zugewandt ist. Entgegen der bekannten Lösung nach der DE 102 48 823 A1 wird keine Druckdifferenz am flüssigkeitsseitigen Führungselement zur Vermeidung des Eindringens von Schmutzpartikeln beseitigt, sondern vielmehr ein echter hydrostatischer Druckausgleich zwischen den beiden Dichtungssystemen des Doppeldichtungssystems herbeigeführt, die zu beiden Endbereichen des Trennkolbens hin sich zwischen den beiden Führungssystemen des Trennkolbens befinden. Durch den hydrostatischen Druckausgleich kommt es mithin nicht mehr zu einem unzulässig hohen Druckaufbau im Betrieb, so dass eine Geräuschbildung ebenso vermieden ist wie eine Extrusion der Dichtungen und/oder ein Klemmen des Trennkolbens im Speichergehäuse.

Auch bewirkt das Fluid in der Druckaufbauzone eine verbesserte Fluid-Schmierung für das Dichtungssystem, das der Seite des Trennkolbens mit dem Arbeitsgas zugewandt ist, was insbesondere eine Rolle spielt, wenn anstelle von gutschmierenden Flüssigkeiten, wie Hydraulikölen, wasserhaltige Flüssigkeiten, wie HFC, zum Einsatz kommen mit demgegenüber deutlich reduzierter Schmierfähigkeit.

Vorzugsweise ist die Wirkungsweise der Ausgleichseinrichtung vergleichbar einem Rückschlagventil mit drosselnder Wirkung, das aus seiner Schließstellung heraus in Richtung des anderen Medienraums mit der Flüssigkeit öffnet. Dergestalt ist eine flüssigkeitsseitige Dichtung mit Druckentlastungsfunktion und mit einer überraschend besseren Schmierung für die gasseitige Dichtung des Trennkolbens gegenüber dem Speichergehäuse erreicht.

In einem weiteren bevorzugten Ausführungsbeispiel ist vorgesehen, dass der jeweilige Kanal des Dichtungsringes, ausgehend von der Ringkammer, um einen fiktiven Neigungswinkel von etwa 30° bis 50°, vorzugsweise von 40°, auf den Stützring und in Richtung des Inneren des Kolbens derjenigen Seite zugeneigt ist, die den anderen Medienraum begrenzt. Dadurch ist das Einströmen des Fluids in den Kanal erleichtert, was die angestrebte Kompensation des Druckes zwischen den drei Dichtungsringen der verschiedenen Dichtungssysteme erleichtert. Das Dichtungsdesign lässt einen minimalen Flüssigkeitsübertritt in den Zwischenraum zwischen den Dichtungen zu; gewährleistet jedoch einen sicheren Abbau von sich aufbauenden Drücken zwischen diesen Dichtungen. Insoweit ist mit dem erfindungsgemäßen Kolbenspeicher auch erreicht, höhere Geschwindigkeiten mit dem Trennkolben zu fahren.

Weitere vorteilhafte Ausführungsformen sind Gegenstand der sonstigen Unteransprüche.

Im Folgenden wird der erfindungsgemäße Kolbenspeicher anhand der Zeichnung näher erläutert. Dabei stellt in prinzipieller und nicht maßstäblicher Darstellung die
- Fig. 1: einen schematisch vereinfachten Längsschnitt durch einen erfindungsgemäßen Kolbenspeicher dar, der der Einfachheit halber den Trennkolben ohne Führungs-, Dichtungs- und Ausgleichseinrichtung zeigt;
- Fig. 2: einen gegenüber Fig. 1 vergrößerten Teilausschnitt des in dem Kolbenspeicher geführten Trennkolbens dar, der der Einfachheit halber ohne Ausgleichseinrichtung gezeigt ist, die ansonsten in dem dargestellten Platzhalter als eine Art Leerstelle aufgenommen ist; und
- Fig. 3: einen gegenüber Fig. 2 vergrößerten Teilausschnitt dar mit der im Trennkolben an der Stelle des Platzhalters nach der Fig. 2 aufgenommenen Ausgleichseinrichtung.

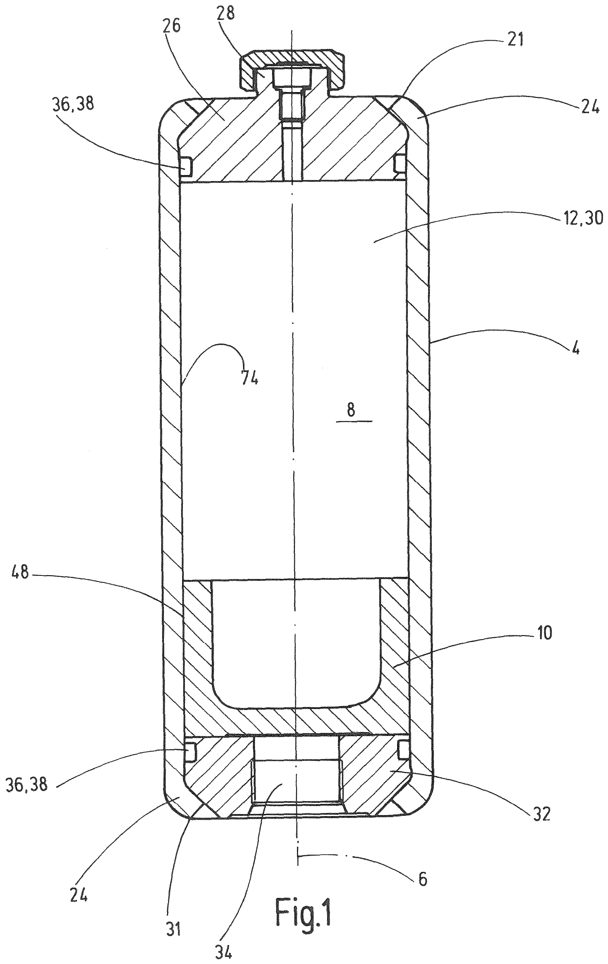

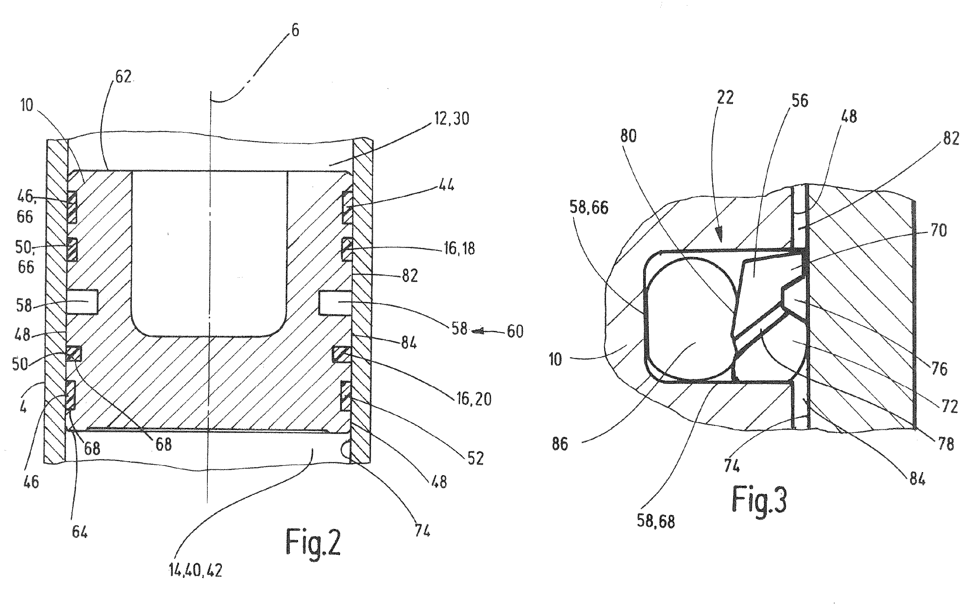

Fig. 1 zeigt einen erfindungsgemäßen Kolbenspeicher mit einem Speichergehäuse 4, das einen sich entlang seiner Längsachse 6 erstreckenden, zylindrischen Innenraum 8 aufweist, und einen darin längsverfahrbar geführten Trennkolben 10. Der Trennkolben 10 separiert im Speichergehäuse 4 einen Medienraum 12 von einem anderen Medienraum 14 und weist ein Doppeldichtungssystem 16 (Fig. 2) auf. Ein Dichtungssystem 18 des Doppeldichtungssystems 16 ist dem einen Medienraum 12 und das andere Dichtungssystem 20 des Doppeldichtungssystems 16 ist dem anderen Medienraum 14 nächstliegend. Zwischen den beiden Dichtungssystemen ist eine Ausgleichseinrichtung 22 (Fig. 3) zumindest teilweise im Trennkolben 10 aufgenommen. Zur Vermeidung eines unerwünschten Druckaufbaus während des Betriebes ermöglicht die Ausgleichseinrichtung 22 einen hydrostatischen Druckausgleich zwischen den beiden Dichtungssystemen 18, 20.

Das zylindrische Speichergehäuse 4 ist an seinem einen Ende 21 durch einen mittels Umbördelung 24 festgelegten Endeinsatz 26 abgeschlossen, der einen konzentrisch angeordneten Gas-Füllanschluss 28 aufweist, über den der durch den Einsatz 26 mitbegrenzte eine Medienraum 12 mit einem unter einem Vorfülldruck stehenden Arbeitsgas 30 befüllbar ist. Am entgegengesetzten Ende 31 ist das Speichergehäuse 4 durch einen weiteren Endeinsatz 32 abgeschlossen, der ebenfalls mittels einer Umbördelung 24 festgelegt ist und eine zentrale Öffnung 34 für eine in den Figuren nicht gezeigte Fluidführung eines hydraulischen Kreises aufweist. Jeder Endeinsatz 26, 32 weist an seinem Außenumfang eine Ringnut 36 auf, in der ein Dichtring 38 vorgesehen ist, der den jeweiligen Endeinsatz 26, 32 gegenüber dem Speichergehäuse 4 abdichtet. Der eine Medienraum 12 enthält als Arbeitsgas 30 Stickstoff und der andere Medienraum 14 eine Flüssigkeit 40 in Form von Hydraulik-Öl 42. Der Trennkolben 10 ist an seinen beiden freien Endbereichen mittels jeweils eines umlaufenden Führungsbandes 44, 52 (Fig. 2) im Speichergehäuse 4 im Wesentlichen geführt. Die Führungsbänder 44, 52 sind jeweils in einer umlaufenden Ringnut 46 am Außenumfang 48 des Trennkolbens 10 aufgenommen, zwischen denen das Doppeldichtungssystem 16 angeordnet ist. So ist das eine Dichtungssystem 18 in Richtung des Flüssigkeitsraums 14 zu dem einen Führungsband 44 axial versetzt in einer Ringnut 50 am Außenumfang 48 des Trennkolbens und das andere Dichtungssystem 20 in Richtung des Gasraums 12 zu dem anderen Führungsband 52 axial versetzt in einer Ringnut 50 am Außenumfang 48 des Trennkolbens aufgenommen, wobei das eine 18 und das andere 20 Dichtungssystem zudem axial voneinander beabstandet sind. Auch die Ausgleichseinrichtung 22, die aus einem umlaufenden Dichtungsring 56 gebildet und zwischen den beiden Dichtungssystemen 18, 20 angeordnet ist, ist in einer Ringnut 58 am Außenumfang 48 des Trennkolbens aufgenommen.

Die am Außenumfang 48 in dem Trennkolben 10 eingebrachte Ringnut 58 zur Aufnahme der Ausgleichseinrichtung 22 ist in Bezug auf die axiale Länge des Trennkolbens 10 in seinem Mittenbereich 60 vorgesehen, vorzugsweise mittig zwischen den beiden freien, einander gegenüberliegenden Stirnseiten 62, 64 des Trennkolbens 10 angeordnet. Die am Außenumfang 48 des Trennkolbens vorgesehenen Ringnuten 46, 50, 58 für die Ausgleichseinrichtung 22, ein jeweiliges Dichtungssystem 18, 20 und ein jeweiliges Führungsband 44, 52 sind im Querschnitt als Mehreck mit rechtwinklig aufeinander stehenden Wänden 66, 68 ausgebildet. Dabei weisen die Ringnuten 46, 50 für die Führungsbänder 44, 52 und das dem Gasraum 12 nächstliegende Dichtungssystem 18 einen Nutgrund 66 auf, der in Axialrichtung gesehen breiter ausgebildet ist als deren ringförmige Seitenwände 68 in Radialrichtung gesehen hoch sind. Im Gegensatz dazu weisen die Ringnuten 50, 58 für die Ausgleichseinrichtung 22 und das dem Flüssigkeitsraum 14 nächstliegende Dichtungssystem 20 ringförmige Seitenwände 68 auf, die in Radialrichtung gesehen höher sind als deren Nutgrund 66 in Axialrichtung gesehen breit ist.

Der Dichtungsring 56 der Ausgleichseinrichtung 22 weist zwei vorspringende Ringsegmente 70, 72 auf, die zur Abdichtung des Gasraumes 12 gegenüber dem Flüssigkeitsraum 14 mit der Innenwand 74 des Speichergehäuses 4 in Anlage sind. Die Ringsegmente 70, 72 begrenzen zwischen sich eine Ringkammer 76, die über mindestens einen Ausgleichskanal 78 mit der Innenseite 80 des Dichtungsringes 56 medienführend verbunden aus dem Dichtungsring 56 in die Ringnut 58 zur Aufnahme der Ausgleichseinrichtung 22 austritt.

Die Zone 82 des Druckaufbaus liegt zwischen dem einen Dichtungssystem 18, das dem Gasraum 12 nächstliegend ist, und der Ausgleichseinrichtung 22. Die Zone 84 eines möglichen Druckabbaus liegt zwischen der Ausgleichseinrichtung 22 und dem anderen Dichtungssystem 20, das dem Flüssigkeitsraum 14 nächstliegend ist. Die Wirkungsweise der Ausgleichseinrichtung 22 ist annähernd vergleichbar einem Rückschlagventil mit drosselnder Wirkung, das aus seiner Schließstellung heraus in Richtung des Flüssigkeitsraums 14 öffnet.

Der am Trennkolben 10 umlaufende Dichtungsring 56 der Ausgleichseinrichtung 22 stützt sich auf seiner Innenseite 80 an einem umlaufenden Stützring 86 ab, der in der Ringnut 58 für die Ausgleichseinrichtung 22 mit aufgenommen ist. Der Stützring 86 ist als elastomerer O-Ring ausgebildet und dient als Vorspannelement für den Dichtungsring 56 der Ausgleichseinrichtung 22. Der den O-Ring umgreifende Dichtungsring 56 der Ausgleichseinrichtung 22 ist bevorzugt aus PTFE(Polytetrafluorethylen)-Material gebildet, kann aber alternativ auch aus einem Thermoplast- oder PU(Polyurethan)-Material gebildet sein. Die Dichtringe 18, 20 des Doppeldichtungssystems 16 sind gleichfalls aus einem dieser Materialien gebildet.

Die mittels des Dichtungsringes 56 der Ausgleichseinrichtung 22 in Kombination mit dem Stützring 86 gebildete Abdichtung zwischen den beiden Medienräumen 12, 14 über den Trennkolben 10 nebst dem Speichergehäuse 4 zeichnet sich durch eine hohe Dichtwirkung, eine geringe Reibung ohne Stick-Slip-Effekt, minimale Losbrechkräfte und eine hohe Verschleißfestigkeit sowie Temperaturbeständigkeit aus.

Der Winkel zwischen den in Radialrichtung verlaufenden Seitenwänden 68 der Ringnut 58 für die Ausgleichseinrichtung 22 und dem jeweiligen in den Dichtungsring 56 eingebrachten Kanal 78 beträgt etwa 40°, wobei der Kanal 78 ausgehend von der Ringkammer 76 in Richtung des Kolbeninneren, also in Richtung des Stützringes 86, schräg zu der Radialrichtung verlaufend derjenigen Stirnseite 64 des Kolbens 10 zugeneigt ist, die den Flüssigkeitsraum 14 mit begrenzt. Anstelle des in Fig. 3 gezeigten einzelnen Kanals 78 können auch mehrere Kanäle, aber auch sonstige Unterbrechungen, wie eine Perforation, in den Dichtungsring 56 der Ausgleichseinrichtung 22 eingebracht sein. Vorzugsweise sind die Kanäle dann diametral einander gegenüberliegend zur Längsachse 6 des Speichers angeordnet.

Das eine Ringsegment 70 des Dichtungsringes 56 der Ausgleichseinrichtung 22, das dichtlippenartig ausgebildet und dem Raum 12 mit dem Arbeitsgas 30 benachbart ist, bildet eine kleinere Anlagefläche mit der Innenwand 74 des Speichergehäuses 4 als die nachfolgende Anlagefläche des weiteren Ringsegments 72, das ballig ausgebildet und dem Flüssigkeitsraum 14 benachbart ist. Der Querschnitt der durch das eine 70 und das andere 72 Ringsegment mitbegrenzten Ringkammer 76 ist trapezförmig ausgebildet.

Ein Trennkolben 10 mit drei unabhängig voneinander arbeitenden Dichtungssystemen 16, 22 mit Dichtungsringen 18, 20, 56 im Sinne der erfindungsgemäßen Lösung erlaubt auch andere Befüllungen der über den Trennkolben 10 voneinander separierten Medienräume 12, 14 im Speichergehäuse 4, also neben gas/flüssig auch flüssig/flüssig, gas/gas oder flüssig/gas. Durch einfaches Umdrehen der Richtung des druckführenden Kanals 78 lässt sich die Druckausgleichsfunktion, wie oben beschrieben, umkehren.

## Patentansprüche

1. Kolbenspeicher mit einem Speichergehäuse (4) und einem darin längsverfahrbar geführten Trennkolben (10), der zwei Medienräume (12, 14) voneinander separiert und der ein Doppeldichtungssystem (16) aufweist, von dem ein Dichtungssystem (18) dem einen Medienraum (12) und das andere Dichtungssystem (20) dem anderen Medienraum (14) zugewandt ist, wobei zwischen den beiden Dichtungssystemen (18, 20) eine Ausgleichseinrichtung (22) zumindest teilweise im Trennkolben (10) aufgenommen ist, die zur Vermeidung eines unerwünschten Druckaufbaus während des Betriebs einen hydrostatischen Druckausgleich zwischen den beiden Dichtungssystemen (18, 20) ermöglicht, **dadurch gekennzeichnet, dass** die Ausgleichseinrichtung (22) in einer Ringnut (58) des Trennkolbens (10) aufgenommen ist und aus einem umlaufenden Dichtungsring (56) gebildet ist, der mit zwei vorspringenden Ringsegmenten (70, 72) mit der Innenseite (74) des Speichergehäuses (4) in Anlage ist, die zwischen sich eine Ringkammer (76) begrenzen, die über mindestens einen Ausgleichskanal (78) mit der Innenseite (80) des Dichtungsringes (56) medienführend verbunden, aus dem Dichtungsring (56) austritt.

2. Kolbenspeicher nach Anspruch 1, **dadurch gekennzeichnet, dass** der eine Medienraum (12) ein Arbeitsgas (30), wie Stickstoff, und der andere Medienraum (14) eine Flüssigkeit (40), wie Hydraulikmedium, aufweist, und dass vorzugsweise das Dichtungssystem (20), das dem anderen Medienraum (14) mit der Flüssigkeit (40) zugeordnet ist, durch diese Flüssigkeit (40) geschmiert ist.

3. Kolbenspeicher nach Anspruch 1 oder 2, **dadurch gekennzeichnet, dass** der Trennkolben (10) zu seinen freien Endbereichen hin mittels Führungsbändern (44, 52) im Speichergehäuse (4) mitgeführt ist, die zwischen sich das Doppeldichtungssystem (16) aufnehmen.

4. Kolbenspeicher nach einem der vorstehenden Ansprüche, **dadurch gekennzeichnet, dass** die Zone (82) des Druckaufbaus zwischen dem einen Dichtungssystem (18), das dem einen Medienraum (12) zugewandt ist, und der Ausgleichseinrichtung (22) liegt und die Zone (84) eines möglichen Druckabbaus zwischen dieser Ausgleichseinrichtung (22) und dem anderen Dichtungssystem (20) liegt, das dem anderen Medienraum (14) zugewandt ist.

5. Kolbenspeicher nach Anspruch 2, **dadurch gekennzeichnet, dass** die Wirkungsweise der Ausgleichseinrichtung (22) vergleichbar einem Rückschlagventil mit drosselnder Wirkung ist, das aus seiner Schließstellung heraus in Richtung des anderen Medienraums mit der Flüssigkeit (40) öffnet.

6. Kolbenspeicher nach einem der vorstehenden Ansprüche, **dadurch gekennzeichnet, dass** der am Trennkolben (10) umlaufende Dichtungsring (56) auf seiner Innenseite (80) sich an einem umlaufenden Stützring (86) abstützt, der in der Ringnut (58) des Trennkolbens (10) mit aufgenommen ist.

7. Kolbenspeicher nach Anspruch 6, **dadurch gekennzeichnet, dass** der jeweilige Kanal (78) des Dichtungsringes (56), ausgehend von der Ringkammer (76), um einen fiktiven Neigungswinkel schräg zu den in Radialrichtung verlaufenden Seitenwänden (68) der Ringnut (58) von etwa 30° bis 50°, vorzugsweise von 40°, auf den Stützring (86) und in Richtung des Inneren des Kolbens (10) derjenigen Seite zugeneigt ist, die den anderen Medienraum (14) begrenzt.

8. Kolbenspeicher nach einem der vorstehenden Ansprüche, **dadurch gekennzeichnet, dass** das eine Ringsegment (70) des Dichtungsringes (56), das dem einen Medienraum (12) benachbart ist, eine kleinere Anlagefläche mit der Innenwand (74) des Speichergehäuses (4) bildet als die nachfolgende Anlagefläche des weiteren Ringsegments (72), die vorzugsweise ballig ausgebildet ist.

9. Kolbenspeicher nach einem der vorstehenden Ansprüche, **dadurch gekennzeichnet, dass** die Ringkammer (76) des umlaufenden Dichtungsringes (56) im Querschnitt gesehen trapezförmig ist.

## Claims

1. Piston accumulator having an accumulator housing (4) and a separating piston (10), which is guided therein such that it can be displaced longitudinally, which separates two media chambers (12, 14) from one another and which has a double sealing system (16), one of the sealing systems (18) facing one media chamber (12) and the other sealing system (20) facing the other media chamber (14), wherein a compensation device (22) is at least partially received in the separating piston (10) between the two sealing systems (18, 20), said compensation device permitting hydrostatic pressure compensation between the two sealing systems (18, 20) to prevent an undesirable pressure build-up during operation, **characterised in that** the compensation device (22) is received in an annular groove (58) of the separating piston (10) and is formed by a peripheral sealing ring (56), which is in contact with the inside (74) of the accumulator housing (4) with two protruding annular segments (70, 72), which delimit between them an annular chamber (76), which, connected in a media-conveying manner to the inside (80) of the sealing ring (56) via at least one compensation channel (78), emerges from the sealing ring (56).

2. Piston accumulator according to claim 1, **characterised in that** one media chamber (12) comprises a working gas (30), such as nitrogen, and the other media chamber (14) comprises a liquid (40), such as hydraulic medium, and **in that**, preferably, the sealing system (20) assigned to the other media chamber (14) containing the liquid (40) is lubricated by this liquid (40).

3. Piston accumulator according to either claim 1 or claim 2, **characterised in that** the separating piston (10) is co-guided towards its free end regions by guide bands (44, 52) in the accumulator housing (4), the double sealing system (16) being received between said guide bands (44, 52).

4. Piston accumulator according to any of the preceding claims, **characterised in that** the pressure build-up zone (82) lies between one sealing system (18), which faces one media chamber (12), and the compensation device (22) and the potential pressure relief zone (84) is located between this compensation device (22) and the other sealing system (20), which faces the other media chamber (14).

5. Piston accumulator according to claim 2, **characterised in that** the mode of operation of the compensation device (22) is comparable to that of a check valve having a throttling effect, said valve opening from its closed position in the direction of the other media chamber containing the liquid (40).

6. Piston accumulator according to any of the preceding claims, **characterised in that** the peripheral sealing ring (56) on the separating piston (10) rests on its inside (80) on a peripheral support ring (86), which is also received in the annular groove (58) of the separating piston (10).

7. Piston accumulator according to claim 6, **characterised in that** the respective channel (78) of the sealing ring (56), starting from the annular chamber (76), is inclined by a notional angle of inclination of approximately 30° to 50°, preferably 40°, obliquely to the side walls (68), which run in the radial direction, of the annular groove (58), towards the support ring (86) and in the direction of the interior of the piston (10) towards the side delimiting the other media chamber (14).

8. Piston accumulator according to any of the preceding claims, **characterised in that** one annular segment (70) of the sealing ring (56), which is adjacent to one media chamber (12), forms a smaller contact surface with the inner wall (74) of the accumulator housing (4) than the adjacent contact surface of the further annular segment (72), which is preferably spherical in shape.

9. Piston accumulator according to any of the preceding claims, **characterised in that** the annular chamber (76) of the peripheral sealing ring (56) is trapezoidal when viewed in cross-section.

## Revendications

1. Accumulateur à piston comprenant une enveloppe (4) d'accumulateur et un piston (10) de séparation, qui y est guidé avec possibilité de déplacement longitudinal, qui sépare l'un de l'autre deux espaces (12, 14) pour des fluides et qui a un système (16) à double étanchéité, dont un système (18) d'étanchéité est tourné vers un espace (12) pour des fluides et dont l'autre système (20) d'étanchéité est tourné vers l'autre espace (14) pour des fluides, dans lequel entre les deux systèmes (18, 20) d'étanchéité est reçu, au moins en partie dans le piston (10) de séparation, un dispositif (22) de compensation, qui rend possible, pour empêcher une montée de la pression, qui n'est pas souhaitée, pendant le fonctionnement, une compensation hydrostatique de la pression entre les deux systèmes (18, 20) d'étanchéité, **caractérisé en ce que** le dispositif (22) de compensation est reçu dans une rainure (58) annulaire du piston (10) de séparation et est formé d'un anneau (56) d'étanchéité faisant le tour, qui est en contact avec la face (74) intérieure de l'enveloppe (4) de l'accumulateur par deux segments (70, 72) annulaires en saillie, qui délimitent entre eux une chambre (76) annulaire laquelle, communiquant fluidiquement par au moins un conduit (78) de compensation avec la face (80) intérieure de l'anneau (56) d'étanchéité, sort de l'anneau (56) d'étanchéité.

2. Accumulateur à piston suivant la revendication 1, **caractérisé en ce que** le un espace (12) pour des fluides a un espace (30) pour du gaz, comme de l'azote, et l'autre espace (14) pour des fluides a un liquide (40) comme un fluide hydraulique et **en ce que**, de préférence le système (20) d'étanchéité, qui est associé à l'autre espace (14) pour des fluides ayant le liquide (40), est lubrifié par ce liquide (40).

3. Accumulateur à piston suivant la revendication 1 ou 2, **caractérisé en ce que** le piston (10) de séparation est guidé dans l'enveloppe (4) de l'accumulateur vers ses parties d'extrémité libre au moyen de bandes (44, 52) de guidage, qui reçoivent entre elles le système (16) d'étanchéité double.

4. Accumulateur à piston suivant l'une des revendications précédentes, **caractérisé en ce que** la zone (82) de la montée de pression se trouve entre le un système (18) d'étanchéité, qui est tourné vers le un espace (12) pour les fluides et le dispositif (22) de compensation et la zone (84) d'abaissement éventuel de la pression se trouve entre ce dispositif (22) de compensation et l'autre système (20) d'étanchéité, qui est tourné vers l'autre espace (14) pour des fluides.

5. Accumulateur à piston suivant la revendication 2, **caractérisé en ce que** le mode d'action du dispositif (22) de compensation est comparable à un clapet anti-retour à effet d'étranglement, qui s'ouvre à partir de sa position de fermeture en direction de l'autre espace pour des fluides ayant le liquide (40).

6. Accumulateur à piston suivant l'une des revendications précédentes, **caractérisé en ce que** l'anneau (56) d'étanchéité faisant le tour du piston (10) de séparation s'appuie sur sa face (80) intérieure sur un anneau (86) d'appui faisant le tour, qui est reçu dans la rainure (58) annulaire du piston (10) de séparation.

7. Accumulateur à piston suivant la revendication 6, **caractérisé en ce que** le conduit (78) respectif de l'anneau (56) d'étanchéité est incliné à partir de la chambre (76) annulaire d'un angle d'inclinaison fictif en oblique par rapport aux parois (68) latérales, s'étendant dans la direction radiale, de la rainure (58) annulaire d'environ 30° à 50°, de préférence de 40°, sur l'anneau (86) d'appui et est incliné en directement de l'intérieur du piston (10) du côté qui délimite d'autre espace (14) pour des fluides.

8. Accumulateur à piston suivant l'une des revendications précédentes, **caractérisé en ce que** le un segment (70) annulaire de l'anneau (56) d'étanchéité, qui est voisin du un espace (12) pour des fluides, forme une surface de contact plus petite avec la paroi (74) intérieure de l'enveloppe (4) de l'accumulateur que la surface de contact suivante de l'autre segment (72) annulaire, qui est constitué en étant de préférence bombée.

9. Accumulateur à piston suivant l'une des revendications précédentes, **caractérisé en ce que** la chambre (76) annulaire de l'anneau (56) d'étanchéité faisant le tour est, considéré en section transversale, en forme de trapèze.
